(19) Europäisches Patentamt
European Patent Office
Office européen des brevets

(11) EP 0 961 136 A2

(12) **EUROPEAN PATENT APPLICATION**

(43) Date of publication:
01.12.1999 Bulletin 1999/48

(51) Int. Cl.$^6$: **G02B 5/02**, F21P 5/02

(21) Application number: 99109876.5

(22) Date of filing: 19.05.1999

(84) Designated Contracting States:
AT BE CH CY DE DK ES FI FR GB GR IE IT LI LU
MC NL PT SE
Designated Extension States:
AL LT LV MK RO SI

(30) Priority: 28.05.1998 IT MI981181

(71) Applicant: CLAY PAKY S.p.A.
I-24066 Pedrengo (IT)

(72) Inventor: Quadri, Pasquale
24060 Torre de' Roveri (IT)

(74) Representative:
Jorio, Paolo et al
STUDIO TORTA S.r.l.,
Via Viotti, 9
10121 Torino (IT)

(54) **Optical diffuser and lighting device equipped therewith**

(57) An optical diffuser (1), in particular for a stage floodlight, wherein a diffusing member (2) is made, for example, of non-sanded white glass, in the form of a disk substantially in the form of a spherical bowl (3) with a predetermined radius of curvature ($R_1$); a convex outer surface (6) of the spherical bowl (3) is a smooth surface, whereas a concave inner surface (5) has a number of spherical lenses (8) having respective convex surfaces (9), all with the same predetermined radius of curvature ($R_2$) much smaller than the radius of curvature ($R_1$) of the spherical bowl (3); and the spherical lenses (8) are arranged in a honeycomb pattern on the concave surface (5) of the diffusing member (2). The optical diffuser (1) is preferably mounted in a lighting device (15) so that the geometric center of the spherical bowl (3) of the diffusing member (2) lies at a focal point (F) of a lens (17) of the lighting device (15).

Fig.2

Fig.1

## Description

The present invention relates to a newly designed optical diffuser, in particular for a stage floodlight, and to a lighting device, in particular a stage floodlight, equipped therewith.

For creating special stage effects, particularly in the entertainment business, floodlights are used in which the light emitted by a light source travels through various optical elements, which modify the intensity, colour, direction and section of the beam and direct it correctly onto a given point (possibly moving).

In particular, floodlights are known in which an optical diffuser is interposed between a light source and a lens (e.g. a Fresnel lens) to create a diffused-light effect. Known diffusers for such applications are normally disks of more or less finely grained sanded glass, possibly lenticular in shape, and the faces of which may be further treated to obtain special effects. Each diffuser has an optical system determining a given angle of diffusion, and different diffusers, each with a different optical system, may be selectively inserted along the optical path of the beam of the same floodlight to obtain different angles of diffusion.

Known diffusers with conventional optical systems are not always entirely satisfactory in certain stage lighting applications, especially as regards overall efficiency and the diffused-light effect achieved. With known diffusers, in fact, the diffused-light effect is mainly produced by the surface design of the (e.g. sanded glass) diffuser faces at the expense of a loss in brightness of the beam through the diffuser. In other cases, the diffused-light effect, as opposed to being uniform, is more pronounced, for example, at the center as compared with the edges of the beam. A need therefore exists for some way of minimizing losses through the diffuser to obtain a highly efficient optical diffuser capable of producing a highly uniform, and at the same time high-intensity, diffused-light effect.

It is therefore an object of the present invention to provide a highly efficient optical diffuser for producing a pleasing, highly uniform diffused-light effect, and which at the same time provides for greatly reducing the loss in brightness of the beam through the diffuser. It is a further object of the invention to provide a lighting device which, using such a diffuser, provides for a pleasing, particularly effective diffused-light effect.

According to the present invention, there is provided an optical diffuser, in particular for a stage floodlight, comprising a diffusing member made of transparent material and having a first and a second diffusing surface opposite and substantially facing each other; characterized in that said first diffusing surface is a concave surface, and in turn comprises a number of spherical lenses having respective convex surfaces with a predetermined radius of curvature; said spherical lenses being arranged side by side to cover substantially the whole of said concave surface of said diffusing member, and overlapping one another to define a honeycomb pattern on said concave surface; said second diffusing surface being a substantially smooth convex surface.

According to the present invention, there is also provided a lighting device, in particular a stage floodlight, comprising a light source, a lens, and at least one optical diffuser; said at least one optical diffuser comprising at least one diffusing member made of transparent material and having a first and a second diffusing surface opposite and facing each other; characterized in that said at least one diffusing member comprises a disk made of transparent material and substantially in the form of a spherical bowl with a predetermined radius of curvature; said first and said second diffusing surface of said diffusing member being a concave surface and a convex surface defined respectively by an inner surface and by an outer surface of said spherical bowl; said diffusing member being located between said lens and a focal point of said lens, at a predetermined distance from said focal point of said lens; said predetermined distance being substantially equal to the radius of curvature of said spherical bowl, so that the geometric center of said spherical bowl lies at said focal point of said lens.

The invention therefore provides a highly efficient optical diffuser, the particular optical system of which provides for obtaining an extremely pleasing, uniform diffused-light effect with no variation in intensity towards the peripheral edges of the beam. At the same time, the loss in brightness of the beam through the diffuser is greatly reduced as compared with conventional diffusers, by the diffuser according to the invention requiring no treated surfaces or sanded glass for obtaining the diffused-light effect, and therefore being made of perfectly transparent white glass. The diffused-light effect, in fact, is obtained by virtue of the innovative optical system of the diffuser, and in particular by virtue of the spherical lenses on the concave surface of the diffuser and the conformation of the diffuser itself.

Alternatively, the diffusing surfaces of the diffuser according to the invention may be treated (e.g. sanded) to obtain special effects. In which case, the overall efficiency of the diffuser will obviously be reduced, but the diffused-light effect will still be extremely uniform with no areas of different intensity, and no differences in intensity between the central area and peripheral edges, by virtue of the optical system of the diffuser.

The diffused-light effect produced by a diffuser of this type is especially satisfactory when the diffuser is used in a lighting device in accordance with the invention.

A non-limiting embodiment of the present invention will be described by way of example with reference to the accompanying drawings, in which:

Figure 1 shows a front view of an optical diffuser in accordance with the invention;

Figure 2 shows a lateral section of the Figure 1 optical diffuser;

Figure 3 shows a larger-scale detail of the Figure 1 optical diffuser;

Figure 4 shows a schematic section of a lighting device featuring the Figure 1 optical diffuser.

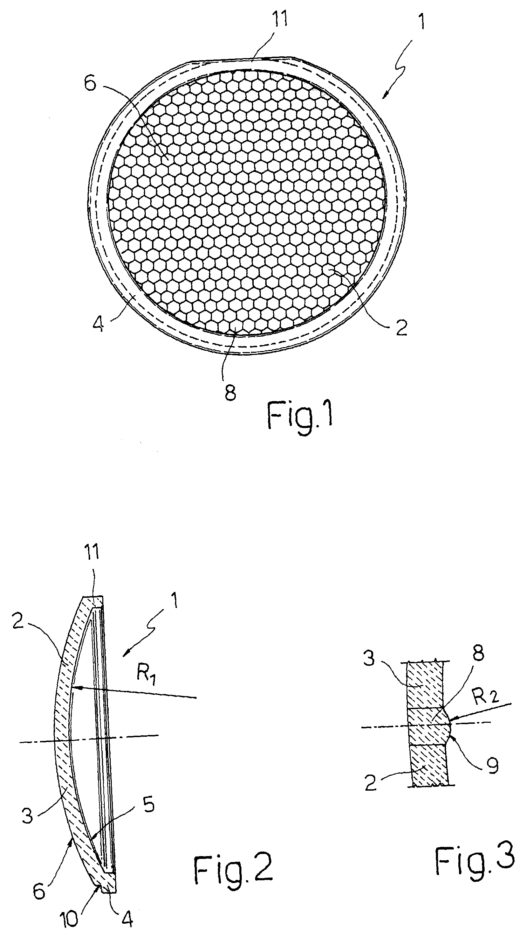

With reference to Figures 1 to 3, an optical diffuser 1 comprises a diffusing member 2 made of transparent material, e.g. white glass. According to the invention, a perfectly transparent, non-sanded glass is advantageously used to enhance the efficiency of optical diffuser 1. In the example shown, diffusing member 2 is a glass disk substantially in the form of a spherical bowl 3 with a predetermined radius of curvature $R_1$, and having an annular edge 4 for connection to a possible supporting member.

Spherical bowl 3 has a concave inner surface 5 and a convex outer surface 6 opposite and substantially parallel to each other and respectively defining a concave surface and a convex surface of diffusing member 2.

According to the invention, whereas convex surface 6 of diffusing member 2 is a smooth surface, concave surface 5 comprises a number of spherical lenses 8 having respective convex surfaces 9, all with the same predetermined radius of curvature $R_2$ much smaller than the radius of curvature $R_1$ of spherical bowl 3. Spherical lenses 8 are arranged side by side to cover substantially the whole of concave surface 5 of diffusing member 2, and overlap one another to define a honeycomb pattern on concave surface 5.

Spherical lenses 8 may, for example, be easily stamped directly onto diffusing member 2 using known techniques.

Annular edge 4 of diffusing member 2 comprises a circumferential step 10 for insertion inside a seat on a supporting member; and a beveled portion 11 for positioning diffusing member 2 correctly on the supporting member.

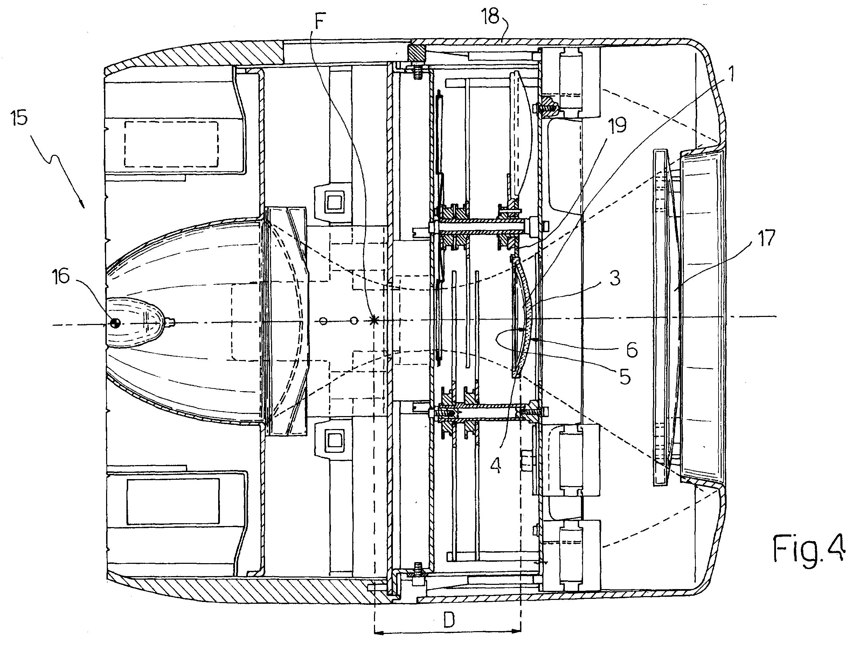

Figure 4 - in which any details similar or identical to those already described are indicated using the same reference numbers - shows a lighting device 15, e.g. a stage floodlight, comprising optical diffusers of the type described above.

Lighting device 15 comprises a light source 16 and a lens 17, e.g. a Fresnel lens, both housed inside a body 18 of any shape, and may of course also comprise various other known components for producing particular optical effects.

Lighting device 15 also comprises at least one optical diffuser 1 made, according to the invention, of transparent material, e.g. non-sanded white glass.

Optical diffuser 1 is of the type described with reference to Figures 1 to 3, and, in particular, comprises a diffusing member 2 defined, in the example shown, by a disk having a concave surface 5 and a convex surface 6 opposite each other and respectively defined by an inner surface and an outer surface of a spherical bowl 3 with a predetermined radius of curvature $R_1$. Whereas convex surface 6 of diffusing member 2 is a smooth surface, concave surface 5 comprises a number of spherical lenses 8 (not shown in Figure 4 for the sake of simplicity) of the type described previously and, in particular, having respective convex surfaces, all with the same predetermined radius of curvature $R_2$ much smaller than the radius of curvature $R_1$ of spherical bowl 3; and spherical lenses 8 are arranged side by side to cover substantially the whole of concave surface 5, and overlap one another to define a honeycomb pattern on concave surface 5.

By means of a respective annular connecting edge 4, diffusing member 2 is fitted in substantially known manner to a known movable support 19 (not shown in detail for the sake of simplicity) inserted, for example, inside a corresponding annular seat.

Optical diffuser 1 is located between light source 16 and lens 17, along the path of the beams emitted by light source 16. According to the invention, optical diffuser 1 is located between lens 17 and a focal point F of lens 17, and at a predetermined distance from focal point F; which distance is substantially equal to the radius of curvature $R_1$ off spherical bowl 3 of optical diffuser 1, so that the geometric center of spherical bowl 3 lies at focal point F of lens 17 according to the equation: $D = R_1$.

As such, all the points on diffusing member 2 are the same distance from the focal point of lens 17.

Though not shown in Figure 4 for the sake of simplicity, lighting device 15 preferably comprises a number of interchangeable diffusing members 2 insertable selectively between light source 16 and lens 17, e.g. by moving respective supports 19. Each diffusing member 2 has a different radius of curvature $R_1$ of the respective spherical bowl and/or a different radius of curvature $R_2$ of respective spherical lenses 8, so as to determine a different angle of diffusion and so vary the angle of diffusion of lighting device 15 by changing the diffusing member 2 in front of light source 16.

Clearly, changes may be made to the optical diffuser and lighting device as described herein without, however, departing from the scope of the accompanying Claims.

For example, as already stated, to achieve special effects, diffusing member 2 may be made of sanded glass, as opposed to perfectly transparent white glass; or surfaces 5, 6 of diffusing member 2 may be subjected to other known forms of processing.

Moreover, diffusing member 2 may be divided into a number of portions, e.g. into two or more sectors, possibly movable with respect to one another to create special lighting effects. Whichever the case, each of the portions into which diffusing member 2 is divided will comprise a concave surface 5 and a convex surface 6 similar to those described previously.

## Claims

1. An optical diffuser (1), in particular for a stage floodlight, comprising a diffusing member (2) made of transparent material and having a first (5) and a second (6) diffusing surface opposite and substantially facing each other; characterized in that said first diffusing surface (5) is a concave surface, and in turn comprises a number of spherical lenses (8) having respective convex surfaces (9) with a predetermined radius of curvature ($R_2$); said spherical lenses (8) being arranged side by side to cover substantially the whole of said concave surface (5) of said diffusing member (2), and overlapping one another to define a honeycomb pattern on said concave surface (5); said second diffusing surface (6) being a substantially smooth convex surface (6).

2. An optical diffuser as claimed in claim 1, characterized in that said respective convex surfaces (9) of said spherical lenses (8) all have the same predetermined radius of curvature ($R_2$).

3. An optical diffuser as claimed in Claim 1 or 2, characterized in that said diffusing member (2) comprises a disk made of transparent material and substantially in the form of a spherical bowl (3) having a predetermined radius of curvature ($R_1$) much larger than the radius of curvature ($R_2$) of said spherical lenses (8); said concave surface (5) and said convex surface (6) of said diffusing member (2) being defined respectively by an inner surface and an outer surface, substantially parallel to each other, of said spherical bowl (3).

4. An optical diffuser as claimed in Claim 3, characterized in that the disk-shaped said diffusing member (2) also comprises an annular edge (4) for connection to a supporting member.

5. A lighting device (15), in particular a stage floodlight, characterized by comprising at least one optical diffuser 81) as claimed in one of Claims 1 to 4.

6. A lighting device (15), in particular a stage floodlight, comprising a light source (16), a lens (17), and at least one optical diffuser (1); said at least one optical diffuser (1) comprising at least one diffusing member (2) made of transparent material and having a first (5) and a second (6) diffusing surface opposite and facing each other; characterized in that said at least one diffusing member (2) comprises a disk made of transparent material and substantially in the form of a spherical bowl (3) with a predetermined radius of curvature ($R_1$); said first (5) and said second (6) diffusing surface of said diffusing member (2) being a concave surface and a convex surface defined respectively by an inner surface and by an outer surface of said spherical bowl (3); said diffusing member (2) being located between said lens (17) and a focal point (F) of said lens (17), at a predetermined distance (D) from said focal point (F) of said lens (17); said predetermined distance (D) being substantially equal to the radius of curvature ($R_1$) of said spherical bowl (3), so that the geometric center of said spherical bowl (3) lies at said focal point (F) of said lens (17).

7. A lighting device as claimed in claim 6, characterized in that said convex surface (6) of said diffusing member (2) is a smooth surface; said concave surface (5) of said diffusing member (2) comprising a number of spherical lenses (8) having respective convex surfaces (9), all with the same predetermined radius of curvature ($R_2$) much smaller than the radius of curvature ($R_1$) of said spherical bowl (3) of said diffusing member (2); said spherical lenses (8) being arranged side by side to cover substantially the whole of said concave surface (5) of said diffusing member (2), and overlapping one another to define a honeycomb pattern on said concave surface (5).

8. A lighting device as claimed in Claim 7, characterized by comprising a number of interchangeable optical diffusers (1) insertable selectively between said light source (16) and said lens (17) to vary the angle of diffusion of said lighting device (15); each of said optical diffusers (1) in turn comprising said at least one diffusing member (2) having a respective radius of curvature ($R_1$) of said spherical bowl (3) and/or a respective radius of curvature ($R_2$) of said spherical lenses (8) to obtain a different angle of diffusion.

9. A lighting device as claimed in one of Claims 6 to 8, characterized in that said lens (17) is a Fresnel lens.

Fig.1

Fig.2

Fig.3

Fig.4

EP 0 961 136 A2